# EUROPEAN PATENT SPECIFICATION

(11) **EP 1 356 989 B1**
(45) Date of publication and mention of the grant of the patent: **08.06.2005**
(21) Application number: 03004085.1
(22) Date of filing: 25.02.2003
(51) Int. Cl.: B60R 1/02

(54) **Device and method for actuating and positioning vehicular monitoring device**
Vorrichtung und Verfahren zum Betätigen und Positionieren einer Überwachungseinrichtung für einen Fahrzeug
Dispositif et méthode d'actionnement et de positionement d'un dispositif de surveillance pour véhicule

(30) Priority: 25.02.2002 CN 02105274
(43) Date of publication of application: 29.10.2003
(73) Proprietor: Exon Science Inc., Guei Shan Shiang, Taoyuan,Taiwan 333 (TW)
(72) Inventor: Su, Wen-Wei, Taoyuan, Taiwan 333 (TW); Chen, Kuei-Hung, Taoyuan, Taiwan 333 (TW); Hsiao, Shun-Hsiang, Taoyuan, Taiwan 333 (TW)
(74) Representative: Winkler, Andreas, Dr.

(56) References cited:
- DE-A- 10 016 222
- PATENT ABSTRACTS OF JAPAN vol. 1999, no. 05, 31 May 1999 (1999-05-31) & JP 11 048865 A (KONGO RAITO KOGYO KK), 23 February 1999 (1999-02-23)
- PATENT ABSTRACTS OF JAPAN vol. 015, no. 134 (M-1099), 3 April 1991 (1991-04-03) & JP 03 016841 A (MATSUYAMA SEISAKUSHO:KK), 24 January 1991 (1991-01-24)

## Description

The present invention relates to an actuating and positioning device, and more particular to a device for actuating and positioning a vehicular monitoring device responsive to a vehicular dynamic status indicator. The present invention also relates to a method for actuating and positioning a vehicular monitoring device responsive to a vehicular dynamic status indicator.

When a driver is seated in a vehicle, he should adjust all of the interior and exterior rearview mirrors according to his need. The rearview mirror can be adjusted manually or automatically by pushing buttons. After the adjustment of rearview mirrors is done, the view angle of each rearview mirror seen by the driver is constant, and it is difficult and also dangerous for the driver to further change the view angles while driving.

In practice, when a driver would like to change to another lane, turn to another direction or overtaking a car, he will need to realize more about the situation of the adjacent lane to see whether there is any vehicle oncoming. Therefore, the horizontally turning of the rearview mirror toward the target lane will be helpful for the lane-changing or overtaking operation. In addition, while moving up or down a slope, it is advantageous to turn the rearview mirror vertically to obtain a view range similar to that on the flat road.

Taiwanese Patent Publication Nos. 388377, 465498, 448874 and 448875 issued to Sun (Taipei, Taiwan, R.O.C) and 459637 to Hsieh (Hsinchu, Taiwan, R.O.C) and co-pending US Patent Application Nos. 09/946,094 and 10/047,762 assigned to the present assignee, which are incorporated herein for reference, disclose the automatic movement of rearview mirrors according to the driving situations of a vehicle so that the driver can have an improved view angle without manually adjusting the rearview mirrors while driving. DE 100 16 222 A1, which compounds to the preamble of claim 1, also discloses the automatic displacement of the external rearview mirrors in response to the change of lanes or carriageways. These techniques, although create a flexible view range for the vehicle, cause a new problem.

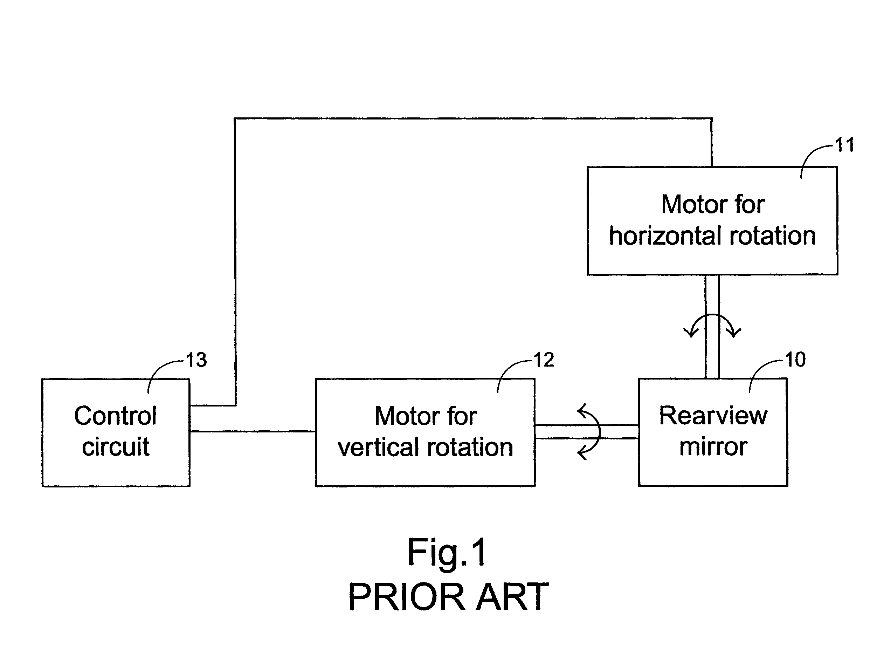

Please refer to Fig. 1 which is a schematic block diagram showing a rearview mirror assembly of the prior art, allowing the mirror to move in a two-dimensional manner. Under the control of the control circuit 13, the mirror 10 can be driven to rotate in a horizontal direction and a vertical direction by the motors 11 and 12, respectively. In the prior art, the control circuit 13 provides driving current to optionally actuate either or both of the motors 11 and 12 so as to drive the mirror 10 to rotate. In other words, the moving extent of the mirror depends on the intensity and the activated time of the driving current. Since the motors 11 and 12 are implemented by direct-current (DC) motors, they may provide differential driving force for the mirror 10 in forward and backward rotation. The mirror 10 is thus likely to deviate from the originally set position, i.e. the best position for regular driving, after a certain number of rotation cycles.

Japanese Patent Publication No. JP-11-48865 suggests the use of a variable resistor electrically connected to the rearview-mirror control circuit to have specified resistance thereof recorded as the original position of the rearview mirror so as to solve the deviation problem.

The present invention provides alternative device and a method for actuating and positioning the rearview mirror, which allows the rearview mirror to recover to the originally set position after automatically rotating to enlarge the view angle as mentioned above.

A first aspect of the present invention relates to a device for actuating and positioning a vehicular monitoring device responsive to a vehicular dynamic status indicator indicating the change of a motion status of a running vehicle according to claim 1.

Preferably, the first operation status of the vehicular dynamic status indicator is an enabled status, and the second operation status is a disabled status.

The vehicular monitoring device, for example, can be a rearview mirror.

The vehicular status indicator, for example, can be a global positioning system (GPS).

The present invention may best be understood through the following description with reference to the accompanying drawings, in which:
Fig. 1 is a schematic functional block diagram showing the two-dimensional rotation of a rearview mirror according to prior art;
Fig. 2 is a schematic circuit block diagram showing the main structure of the actuating and positioning device according to the present invention;
Fig. 3 is a schematic circuit block diagram showing an actuating and positioning device according to the present invention;

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

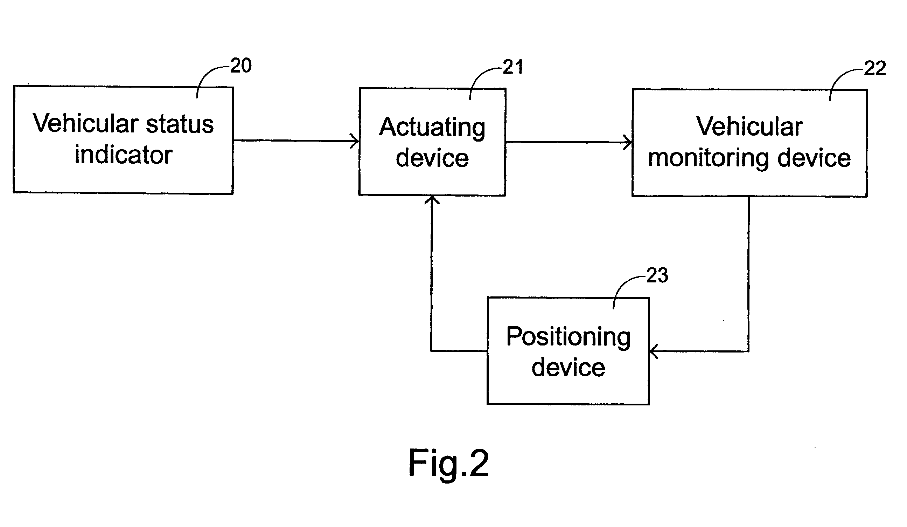

Referring to Fig. 2, the main structure of the present actuating and positioning device is shown. The actuating and positioning device controls the movement of a vehicular monitoring device responsive to the operation of a vehicular status indicator. The vehicular monitoring device, for example, can be a rearview mirror module, a combination of a camera such as a CCD or CMOS camera and a display such as a liquid crystal display, or any other vehicular monitoring device having an adjustable view range. Herein and hereinafter, the term "move", "moving", "moved" or "movement" broadly means the change of the vehicular monitoring device on location, orientation, zooming effect etc., due to for example shift, rotation, pivoting or the combination thereof, in order to obtain a suitable view range. The vehicular status indicator, for example, can be an electronic compass, a global positioning system (GPS), a telematics system, an attitude indicator, a vehicle stability control system, or a yaw sensor included in an electronic stability program (ESP). Some of the output signals indicate the turning operation of the vehicle, some indicate the slope change of the vehicle, and others indicate the speed change of the vehicle. For example, in the case that the vehicle is climbing up a slope, the rearview mirror is preferably turned downwards in response to the control signal. For the case that the vehicle is suddenly changing up, the two rearview mirrors are both rotated outwards for facilitating the overtaking operation.

As shown in Fig. 2, the actuating and positioning device includes an actuating device 21 in communication with the vehicular status indicator 20 and the vehicular monitoring device 22, and a positioning device 23 in communication with the actuating device 21 and the vehicular monitoring device 22. When the vehicular status indicator 20 indicates a status change of the vehicle, the vehicular monitoring device 22 is actuated by the actuating device 21 to move from an initial position to a working position to result in a suitable view range for the reference of the driver. When the operation status of the vehicle returns normal, the vehicular monitoring device 22 is actuated by the actuating device 21 to return the initial position from the working position. Meanwhile, the positioning device asserts a positioning signal to the actuating device according to the current position of the vehicular monitoring device for the reference of the actuating device in order to precisely locate the initial position.

The implementation of the actuating device can refer to the conventionally used one, e.g. a motor or motors in the vertical and horizontal directions. The operational examples of the positioning device are illustrated as follows by using a turning-direction indicator light module as the vehicular status indicator and a rearview mirror as the vehicular monitoring device. When the left or right indicator light is enabled, the motor drives the corresponding rearview mirror to move from an initial position suitable for straight travel outwards to a working position where the adjacent lane can be seen clearly. On the contrary, when the indicator light is disabled, the motor drives the rearview mirror to return the working position from the working position.

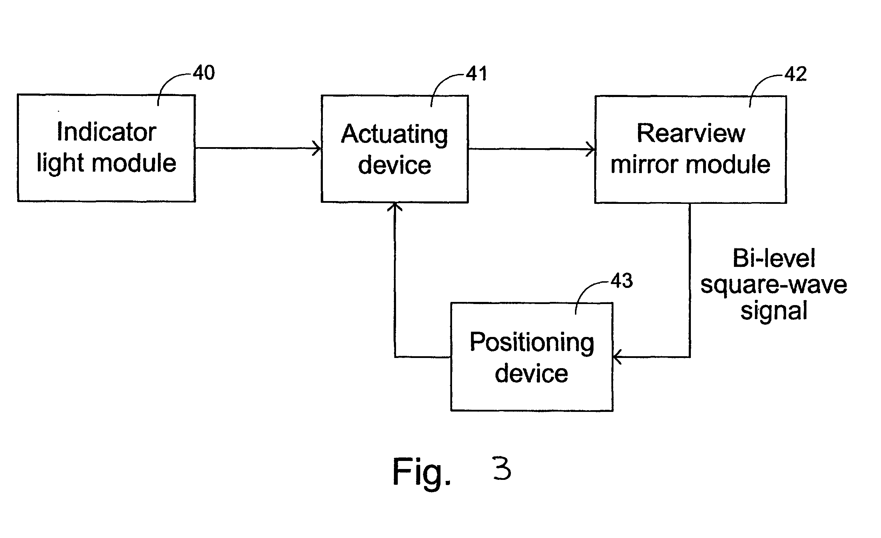

Please refer to Fig. 3 which is a schematic circuit block diagram showing an actuating and positioning device according to the present invention. The positioning device 43 locates the initial position according to the pulse number of a bi-level square-wave signal outputted by the rearview mirror module 42, which varies with the current position of the rearview mirror module 42. The variation of electric potential with the current position of the rearview mirror module 42 can be conducted by providing a photoelectric encoder module (not shown) to the rearview mirror module 42. With the movement of the rearview mirror, different pulse numbers are detected by the photoelectric encoder module. When the mirror is moved from the initial position to the working position, the pulse number data are recorded in advance. Once the mirror is moved from the working position toward the initial position, the pulse number information is outputted to the positioning device 43, and compared with the recorded data to locate the initial position. When the comparing result indicates the coming of the initial position, the positioning device 43 asserts the positioning signal to the motor to stop driving. The photoelectric encoder module, for example, can include a light emitter, a grid wheel and a light detector. The function of the positioning device 43, for example, can be implemented by a microcontroller.

In another aspect of the present invention, preferably, the movement speed of the vehicular monitoring device between the initial position and the working position depends on the velocity of the vehicle. The faster the vehicle runs, the faster the vehicular monitoring device moves. As such, the driver can realize the environment situation quickly. For efficiently achieving the above purpose, a vehicular digital bus such as a controller area network (CAN) or a vehicular area network (VAN) bus is preferred used to transfer signals, e.g. the positioning signal, velocity-indicating signal, motor-actuating signal, etc.

## Claims

1. A device for actuating and positioning a vehicular monitoring device (42) responsive to a vehicular dynamic status indicator (40) indicating the change of a motion status of a running vehicle, wherein the device comprises:
an actuating device (41) in communication with the vehicular dynamic status indicator (40) and the vehicular monitoring device (42), actuating the vehicular monitoring device (42) to move from an initial position to a working position in response to a first operation status of the vehicular dynamic status indicator (40), and actuating the vehicular monitoring device (42) to return to the initial position in response to a second operation status of the vehicular dynamic status indicator, and
a positioning device (43) in communication with the vehicular monitoring device (42) and the actuating device (41),
**characterized in that** a photoelectric encoder module of the vehicular monitoring device (42) outputs a bi-level square-wave signal to record the current position of the vehicular monitoring device (42) when the vehicular monitoring device (42) moves from the initial position to the working position and **in that** the positioning device (43) is asserting a positioning signal to stop the actuating device (41) when it is determined that the vehicular monitoring device (42) has returned to the initial position by referring to the bi-level square-wave signal.

2. The device according to claim 1, **characterized in that** the first operation status of the vehicular dynamic status indicator (40) is an enabled status, and the second operation status is a disabled status.

3. The device according to claim 1, **characterized in that** the vehicular monitoring device (42) is a rearview mirror.

4. The device according to claim 1, **characterized in that** the vehicular status indicator (40) is a global positioning system (GPS).

## Patentansprüche

1. Vorrichtung zum Betätigen und Positionieren einer Überwachungseinrichtung (42) für ein Fahrzeug, die auf einen dynamischen Statusindikator (40) für ein Fahrzeug anspricht, der den Wechsel eines Bewegungsstatus eines fahrenden Fahrzeugs anzeigt, wobei die Vorrichtung umfaßt:
eine Betätigungsvorrichtung (41) in Verbindung mit dem dynamischen Statusindikator (40) für ein Fahrzeug und der Überwachungseinrichtung (42) für ein Fahrzeug, die die Überwachungseinrichtung (42) für ein Fahrzeug betätigt, um sich aus einer Anfangsposition zu einer Betriebsposition in Ansprechung auf einen ersten Betriebsstatus des dynamischen Statusindikators (40) für ein Fahrzeug zu bewegen, und die die Überwachungseinrichtung (42) für ein Fahrzeug betätigt, um zu der Anfangsposition in Ansprechung auf einen zweiten Betriebsstatus des dynamischen Statusindikators für ein Fahrzeug zurückzukehren,
eine Positionierungsvorrichtung (43) in Verbindung mit der Überwachungseinrichtung (42) für ein Fahrzeug und der Betätigungsvorrichtung (41), **dadurch gekennzeichnet, daß**
ein fotoelektrisches Codiereinrichtungsmodul der Überwachungseinrichtung (42) für ein Fahrzeug ein Zwei-Niveau-Rechteckwellensignal ausgibt, um die gegenwärtige Position der Überwachungseinrichtung (42) für ein Fahrzeug aufzuzeichnen, wenn die Überwachungseinrichtung (42) für ein Fahrzeug sich von der Anfangsposition zu der Betriebsposition bewegt, und daß die Positionierungsvorrichtung (43) ein Positionierungssignal bestimmt, um die Betätigungsvorrichtung (41) zu stoppen, wenn ermittelt ist, daß die Überwachungseinrichtung (42) für ein Fahrzeug zu der Anfangsposition unter Bezugnahme auf das Zwei-Niveau-Rechteckwellensignal zurückgekehrt ist.

2. Vorrichtung nach Anspruch 1, **dadurch gekennzeichnet, daß** der erste Betriebsstatus des dynamischen Statusindikators (40) für ein Fahrzeug ein betriebsbereiter Status ist und der zweite Betriebsstatus ein betriebsunfähiger Status ist.

3. Vorrichtung nach Anspruch 1, **dadurch gekennzeichnet, daß** die Überwachungseinrichtung (42) für ein Fahrzeug ein Rückspiegel ist.

4. Vorrichtung nach Anspruch 1, **dadurch gekennzeichnet, daß** der Statusindikator (40) für ein Fahrzeug ein globales Positionierungssystem (GPS) ist.

## Revendications

1. Dispositif d'actionnement et de positionnement d'un dispositif de contrôle véhiculaire (42) réagissant à un indicateur de statut dynamique véhiculaire (40) indiquant le changement d'un statut de mouvement d'un véhicule en fonctionnement, dans.lequel le dispositif comprend :
un dispositif d'actionnement (41) en communication avec l'indicateur de statut dynamique véhiculaire (40) et le dispositif de contrôle véhiculaire (42), actionnant le dispositif de contrôle véhiculaire (42) pour le déplacer depuis une position initiale vers une position de travail en réponse à un premier statut d'opération de l'indicateur de statut dynamique véhiculaire (40), et actionnant le dispositif de contrôle véhiculaire(42) pour le renvoyer à la position initiale en réponse à un deuxième statut d'opération de l'indicateur de statut dynamique véhiculaire,
un dispositif de positionnement (43) en communication avec le dispositif de contrôle véhiculaire (42) et le dispositif d'actionnement (41), **caractérisé en ce qu'**un module d'encodage photoélectrique du dispositif de contrôle véhiculaire (42) émet un signal d'onde carrée à deux niveaux pour enregistrer la position actuelle du dispositif de contrôle véhiculaire (42) lorsque le dispositif de contrôle véhiculaire (42) se déplace depuis la position initiale vers la position de travail, et **en ce que** le dispositif de positionnement (43) affirme un signal de positionnement pour interrompre le dispositif d'actionnement (41) lorsqu'il est déterminé que le dispositif de contrôle véhiculaire (42) est revenu à la position initiale en se référant au signal d'onde carrée à deux niveaux.

2. Dispositif selon la revendication 1, **caractérisé en ce que** le premier statut de fonctionnement de l'indicateur de statut dynamique véhiculaire (40) est un statut activé, et le deuxième statut de fonctionnement est un statut désactivé.

3. Dispositif selon la revendication 1, **caractérisé en ce que** le dispositif de contrôle véhiculaire (42) est un rétroviseur intérieur.

4. Dispositif selon la revendication 1, **caractérisé en ce que** l'indicateur de statut véhiculaire (40) est un système mondial de positionnement (GPS).
